# DEMANDE DE BREVET EUROPEEN

(11) **EP 0 764 507 A1**
(43) Date de publication de la demande: **26.03.1997**
(21) Numéro de dépôt: 96401882.4
(22) Date de dépôt: 03.09.1996
(51) Int. Cl.: B29C 45/14, B29C 45/44

(54) **Raccord profilé creux**

(30) Priorité: 19.09.1995 DE 19534706
(71) Demandeur: SAINT-GOBAIN VITRAGE, 92400 Courbevoie (FR)
(72) Inventeur: Meyer, Stefan, 52531 Ubach-Palenberg (DE); Handels, Hubert, 52146 Würselen (DE); Krumm, Helmut, 52074 Aachen (DE); Joeris, Herbert, 52146 Würselen (DE); Scholl, Heinz, 52249 Eschweiler (DE); Kittel, Florenz, 52146 Würselen (DE)
(74) Mandataire: Le Cam, Stéphane Georges Elie

(57) **Abrégé**

Lors de l'extrusion d'un boudin profilé creux en forme de cadre sur un vitrage (1), la zone de raccord entre le début et la fin du boudin extrudé est postformée à l'aide d'un moule à injection (13). Au niveau de l'endroit à postformer, le segment de forme irrégulière est tout d'abord enlevé mécaniquement. Dans le creux des deux parties d'extrémité adjacentes l'une à l'autre du boudin profilé creux est alors introduit un noyau en cire. Le moule à injection (13) est ensuite posé, et le boudin profilé creux est complété à cet endroit par injection d'un élastomère durcissable. Le segment ainsi complété du boudin profilé est ensuite chauffé au point que le noyau fonde et que la cire se répartisse en une couche (22) sur le fond du creux (5).

## Description

La présente invention concerne un procédé pour former un boudin profilé creux constitué d'un élastomère apte à l'extrusion sur la zone marginale d'un objet plan.

Il est connu de prévoir sur le bord d'objets plans un boudin profilé creux en un polymère à élasticité permanente, le boudin profilé creux constitué d'un élastomère apte à l'extrusion qui adhère à l'objet étant extrudé directement sur l'objet. Par exemple, le document EP-0 188 391 B1 décrit une jonction collée pour le collage d'un vitrage à un cadre de fenêtre, dans lequel le boudin de colle est constitué d'un polymère à élasticité permanente et présente un creux qui le traverse de bout en bout. Dans ce cas, le creux doit faciliter un démontage, le cas échéant, nécessaire du vitrage. A cette fin, il est rempli d'un milieu fluide sous pression, ce qui déforme le boudin polymérique et éjecte le vitrage du cadre. Le boudin polymérique peut alors être sectionné facilement avec un outil de coupe.

De la même façon, il est possible d'extruder un boudin profilé creux constitué d'un élastomère, qui doit remplir une fonction d'étanchéité, à l'aide du procédé d'extrusion décrit dans le document EP-O 188 391 B1 sur un corps plan, par exemple sur un vitrage ou sur un élément de construction constitué d'une autre matière quelconque, comme un vantail de fenêtre, un battant de porte, un capot ou des objets analogues. Des profilés tubulaires souples notamment, constitués d'un élastomère, sont particulièrement appropriés pour des fonctions d'étanchéité.

Lorsqu'un cadre fermé sur lui-même doit être extrudé sur un objet plan, il est nécessaire de postformer la zone de raccord entre le début et la fin du boudin polymérique extrudé. A cet effet un procédé connu par le document EP-0 524 060 A1 prévoit d'enlever mécaniquement un segment limité localement du boudin polymérique dans la zone du raccord après le durcissement du boudin polymérique, et, à l'aide d'un procédé semblable au moulage par injection, d'entourer cette zone de l'objet d'un moule en deux parties et de compléter le boudin polymérique par le fait qu'un polymère durcissant relativement vite, qui forme une liaison durable avec les deux zones d'extrémité du profilé polymérique et avec la surface de l'objet plan, est injecté dans le moule.

Si, dans le cas du boudin profilé extrudé, il s'agit d'un boudin profilé creux, qui doit aussi conserver l'élasticité du profilé tubulaire souple à l'endroit du raccord entre le début et la fin du boudin polymérique extrudé, le procédé connu pour postformer la zone de raccord ne peut pas être utilisé. Pour obtenir un profilé creux, le moule à injection devrait en effet être pourvu d'un noyau. Un noyau ne peut cependant plus être enlevé du tube à présent complètement fermé après l'exécution du processus de postformage.

L'invention a pour but de développer un procédé pour former un boudin profilé creux constitué d'un élastomère, procédé qui soit à même d'extruder un cadre fermé sur lui-même constitué d'un profilé creux sur un objet et de procéder à un postformage nécessaire du boudin profilé creux à certains endroits, de telle sorte que la déformabilité élastique du profilé creux reste également conservée aux endroits postformés.

Le procédé conforme à l'invention permettant d'atteindre ce but est caractérisé en ce qu'un segment localement limité du boudin profilé durci, à un endroit à postformer du boudin profilé creux est enlevée mécaniquement au moins partiellement, un noyau reliant des parties d'extrémité, adjacentes l'une à l'autre du boudin profilé creux est introduit dans le creux des deux parties d'extrémité, la partie de l'objet présentant la zone à postformer est entourée d'un moule à injection et le boudin profilé creux est complété à cet endroit par l'injection d'un élastomère durcissable dans le moule à injection, et en ce que le noyau est ensuite détruit de telle sorte que la matière du noyau se répartisse dans le creux du boudin profilé.

L'élimination du noyau doit être réalisée de manière que la paroi intérieure du creux soit dégagée dans la zone du noyau inséré au moins dans une mesure telle que le profilé tubulaire souple conserve aussi à cet endroit une élasticité suffisante.

En principe, le procédé conforme à l'invention peut être exécuté de différentes façons. Il est ainsi par exemple possible d'utiliser un noyau constitué d'un petit tube à paroi mince en une matière fragile et de détruire mécaniquement ce noyau, par exemple en exerçant une contrainte sur le segment de profilé postformé. Les fragments ainsi formés du petit tube restent dans le creux du profilé tubulaire, sans influencer défavorablement la capacité de fonctionnement du profilé d'étanchéité. De tels noyaux peuvent être faits, par exemple, d'une céramique fragile ou d'un polymère fragile et cassant ou d'une matière expansée en céramique ou en matière plastique.

Suivant une autre forme d'exécution du procédé conforme à l'invention, on utilise un noyau en une matière à bas point de fusion, qui lorsque le boudin profilé creux a été complété, est éliminé par chauffage subséquent. Le chauffage du noyau à la suite du processus de postinjection proprement dit doit, dans ce cas, se produire en fonction de la matière utilisée pour le noyau, de telle sorte que le noyau fonde complètement et que la matière de noyau fondue se répartisse sur une distance aussi grande que possible dans la partie inférieure du creux, de manière qu'au moins la partie supérieure du profilé d'étanchéité souple garde l'élasticité nécessaire pour pouvoir remplir la fonction d'étanchéité aussi à cet endroit.

Pour l'extrusion d'un boudin profilé creux sur un objet plan, on peut utiliser tant des systèmes à réaction que des systèmes à élastomère thermoplastique. Tandis que la forme d'exécution de l'invention impliquant une destruction mécanique du noyau convient de façon égale aux deux systèmes, la forme d'exécution de l'invention impliquant une destruction thermique du noyau convient, de préférence, à des profilés creux issus d'un système à réaction, puisque, dans le cas d'un système à élastomère thermoplastique, le danger existe que le profilé en élastomère lui-même soit endommagé lors du chauffage pour la destruction du noyau. Certes, la destruction du noyau par voie thermique est aussi en principe possible dans ce cas, mais l'intensité et la durée du chauffage doivent alors être ajustées très précisément par rapport aux matières utilisées respectives.

Le procédé conforme à l'invention impliquant une destruction thermique du noyau peut être utilisé de manière particulièrement avantageuse dans les cas où l'on utilise, pour les zones de raccord à postformer des systèmes à réaction pour lesquels la réaction de polymérisation est accélérée par apport de chaleur, de telle sorte que, sous l'effet de l'énergie calorifique fournie, le corps de moulage injecté acquière d'abord une stabilité de forme et que le noyau fonde ensuite.

L'apport de chaleur nécessaire pour la fusion de la matière du noyau a lieu de façon avantageuse à travers le moule à injection chauffé. Cependant, si le chauffage effectué à travers le moule à injection du segment de profilé postformé n'est pas suffisant pour faire fondre le noyau, le chauffage nécessaire pour la fusion est réalisé par une action calorifique supplémentaire, lorsque le moule à injection est retiré du boudin profilé.

Les paraffines dures et les cires à haut point de fusion conviennent particulièrement comme matières pour des noyaux en matières fusibles. Tant les paraffines dures que les cires à haut point de fusion sont disponibles avec des températures de fusion différentes, de sorte que les matières appropriées pour le cas particulier peuvent être choisies sans difficulté dans ce groupe de matières. Des paraffines, par exemple avec des températures de fusion d'environ 50 à 130°C, et des cires, avec des températures de fusion d'environ 50 à 200°C, sont disponibles dans le commerce. La matière appropriée dans le cas particulier doit, le cas échéant, être déterminée par des essais. Il va de soi que d'autres matières présentant un bas point de fusion peuvent aussi être employées, par exemple des alliages métalliques à bas point de fusion ou des matières thermoplastiques appropriées.

Un exemple d'exécution de l'invention sera décrit plus en détail ci-après sur la base des dessins.

Dans les dessins :

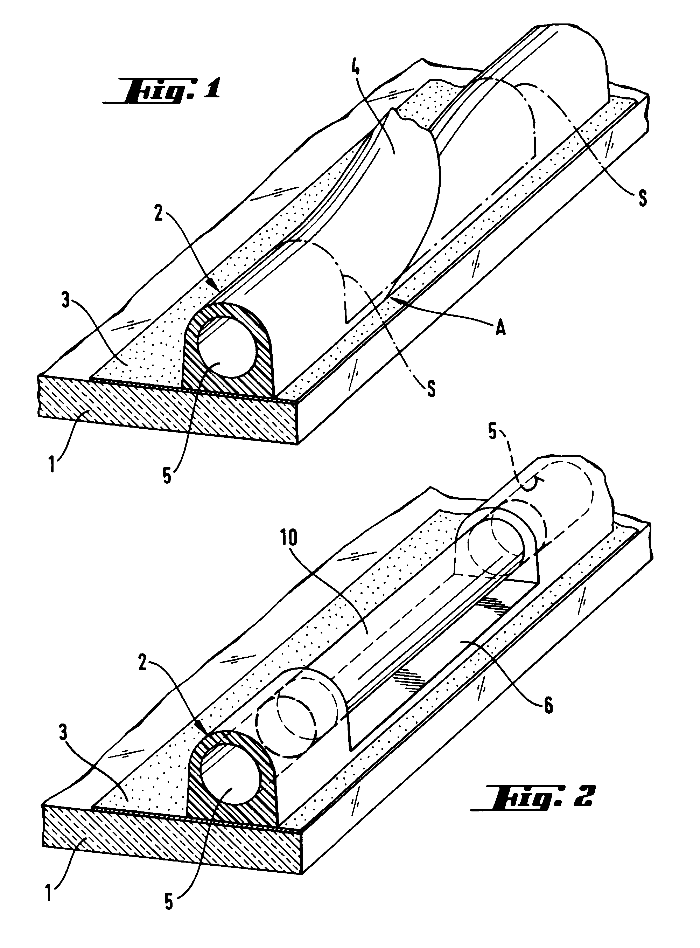

la Fig. 1 montre un cadre d'étanchéité, extrudé sur la zone marginale d'un vitrage, constitué d'un profilé à chambre creuse dans la zone de raccord du début et de la fin du boudin profilé extrudé;

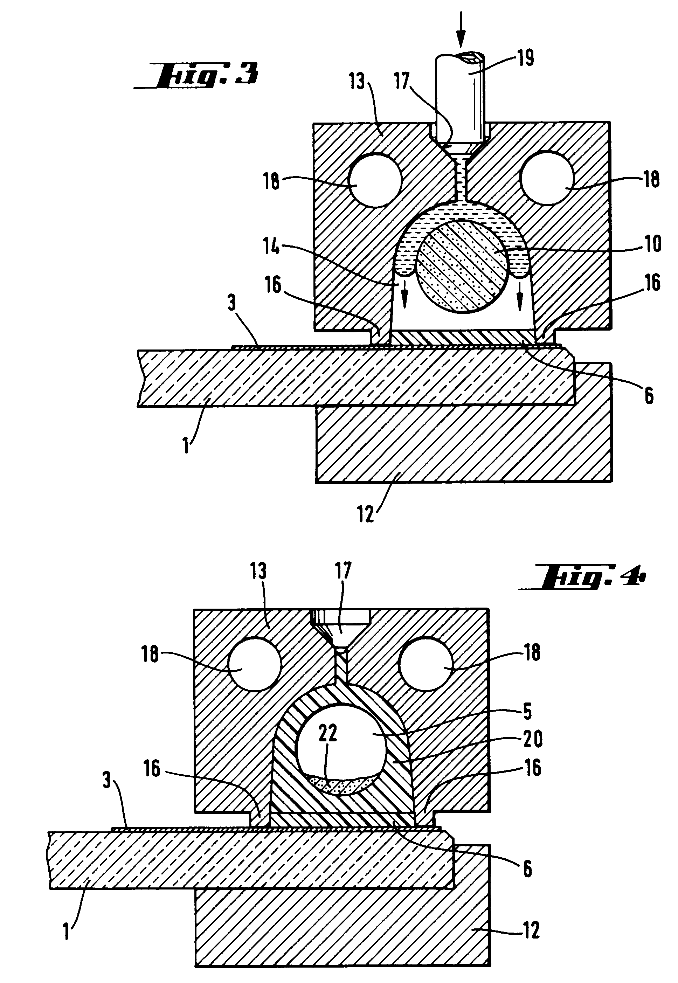

la Fig. 2 montre la zone de raccord représentée sur la Fig. 1 après l'enlèvement mécanique du segment de profilé creux et l'introduction d'un noyau;
la Fig. 3 est une vue en coupe à travers l'outil de postinjection, pendant l'opération de postinjection, et
la Fig. 4 est une vue en coupe à travers l'outil de postinjection après la fusion du noyau.

Dans les dessins est à chaque fois représenté un fragment marginal d'un vitrage 1, qui est pourvu le long de son bord d'un profilé à chambre creuse 2 tubulaire souple faisant le tour de sa surface. Le vitrage 1 est représenté comme un vitrage monolithique, mais on comprendra qu'il peut également s'agir dans ce cas-ci d'un vitrage feuilleté multicouche. Habituellement, de tels vitrages, tels ceux qui sont utilisés par exemple comme vitrages d'automobile, sont pourvus sur leur zone marginale d'une couche 3 opaque en forme de cadre faite d'une encre à cuire, qui a pour fonction de protéger le cadre profilé des rayons UV.

Le profilé à chambre creuse 2 est extrudé à l'aide d'un procédé d'extrusion directement sur le vitrage 1 ou sur la couche opaque 3. Le cas échéant, un prétraitement de la surface de verre ou de la surface de la couche 3 et/ou l'application d'un agent adhésif précèdent le procédé d'extrusion. Des procédés d'extrusion correspondants sont connus et sont décrits par exemple dans les documents déjà cités au début du présent mémoire EP-0 188 391 B1, EP-0 121 481 B1 et 0 524 092 B1. A cette fin, la filière d'extrusion est posée à l'endroit A sur le vitrage, est guidée le long du bord du vitrage et, après avoir fait le tour du vitrage et avoir atteint l'endroit A, elle est levée du vitrage et le débit du polymère dans la filière d'extrusion est simultanément interrompu. A l'endroit A, où le début et la fin du boudin profilé à chambre creuse extrudé se rejoignent, il se forme inévitablement une accumulation 4 de forme irrégulière du polymère qui a également pour effet que le creux continu 5 du boudin profilé est forcément obturé.

Après que le cadre profilé à chambre creuse 2 a été fabriqué de cette façon par extrusion sur le vitrage 1, on laisse durcir le profilé polymérique extrudé 2 au point qu'il puisse être sectionné proprement, sans qu'il n'y ait de déformations plastiques au niveau des endroits de sectionnement. Après cela, le boudin profilé 2 est sectionné des deux côtés de la zone de raccord, à chaque fois en un endroit, où le boudin profilé 2 présente une section transversale parfaite, et ce, suivant le plan S à l'aide d'un outil de coupe approprié. De même, la partie inférieure du boudin profilé 2 est sectionnée juste au-dessus de la surface du verre selon un plan s'étendant parallèlement à la surface du verre, de sorte que la couche inférieure extrême 6 subsiste en tant que couche polymérique mince à haute adhérence sur la surface de verre ou sur la couche opaque 3.

L'enlèvement de la masse polymérique durcie dans cette zone de raccord peut également être réalisé à l'aide d'un outil à raboter ou à fraiser approprié à cet effet, en lieu et place des outils de coupe appropriés.

Le cas échéant, la partie inférieure 6 peut également être enlevée complètement. Puisqu'il est cependant parfois difficile d'enlever complètement la masse polymérique durcie jusqu'à la couche 3, sans endommager ce faisant la couche 3, ce qui peut éventuellement être vu à travers le vitrage 1, il est avantageux de garder la couche inférieure extrême 6 du boudin profilé extrudé sur le vitrage.

Lorsque le boudin profilé 2 est préparé sur le vitrage 1 de la façon décrite, les surfaces de sectionnement sont également traitées à l'aide d'un ou de plusieurs agents adhésifs appropriés selon le type de matières utilisées dans le cas précis. Après cela, un noyau 10 en une cire dure ou une paraffine dure appropriée, dont le diamètre correspond au diamètre intérieur du creux 5 et qui est un peu plus long que la distance entre les deux lignes de coupe S, est introduit des deux côtés dans le creux 5 du boudin profilé 2.

Comme le montrent les Fig. 3 et 4, le raccord entre les deux extrémités du boudin profilé est ensuite formé par injection à l'aide d'un outil de moulage par injection avec un élastomère approprié. L'outil de moulage par injection comprend une plaque d'appui 12 comme support et pour le positionnement du vitrage 1, de même que le moule à injection 13 proprement dit. Le moule à injection 13 présente la cavité 14 calibrée ouverte vers le bas, dont la section transversale correspond à la section transversale extérieure du boudin profilé 2. Les deux nervures d'étanchéité 16, qui limitent la cavité 14 sur le côté inférieur du moule à injection ferment de façon étanche la cavité d'injection sur la surface de verre et/ou sur la couche 6. Le moule à injection 13 est, en outre, pourvu d'une lumière d'injection 17 de même que d'alésages 18, dans lesquels sont disposées, par exemple, des résistances chauffantes électriques.

Pendant l'opération d'injection, la température du moule à injection 13 est réglée par les éléments chauffants électriques à une valeur déterminée, qui se trouve quelque peu au-dessus de la température de fusion du noyau 10. Le rayonnement thermique dégagé par les surfaces de moulage ne suffit cependant pas pour faire fondre la matière du noyau. Egalement pendant l'opération d'injection même, le noyau 10 n'est pas chauffé à sa température de fusion, parce que le polymère injecté accuse, lors de l'injection une température relativement faible et présente initialement une couche d'isolation par rapport à la surface de moulage dont la température est supérieure. La chaleur n'est transmise au noyau 10 qu'après la fin de l'opérationn d'injection, lorsque le corps de moulage postinjecté 20 s'est échauffé au contact direct de la surface de moulage de la cavité 14. Avant que le noyau 10 ne fonde et ne se répartisse sur le fond du creux 5 sous la forme d'une couche 22 plus ou moins mince, le chauffage a cependant réalisé la réaction de polymérisation du corps de moulage 20, qui, au début de l'opération de fusion du noyau 10, est au moins solidifié au point de conserver sa forme souhaitée. Lorsque le noyau 10 est fondu et que la réaction de polymérisation est terminée, le moule à injection 13 est enlevé, et le vitrage est retiré de la plaque d'appui 12.

## Revendications

1. Procédé pour former un boudin profilé creux constitué d'un élastomère apte à l'extrusion sur la zone marginale d'un objet plan, caractérisé en ce qu'un segment localement limité du boudin profilé durci à un endroit à postformer du boudin profilé creux est enlevé mécaniquement au moins partiellement, un moyen reliant les parties d'extrémité, adjacentes l'une à l'autre, du boudin profilé creux est introduit dans le creux des deux parties d'extrémité, la partie de l'objet présentant la zone à postformer est entourée d'un moule à injection et le boudin profilé creux est complété à cet endroit par l'injection d'un élastomère durcissable dans le moule à injection, et en ce que le noyau est ensuite détruit de telle sorte que la matière du noyau se répartisse dans le creux du boudin profilé.

2. Procédé suivant la revendication 1, caractérisé en ce qu'on utilise un noyau constitué d'une matière fragile cassante qui est détruit et fragmenté par application de forces mécaniques sur le segment de profilé creux postformé.

3. Procédé suivant la revendication 2, caractérisé en ce qu'on utilise un noyau constitué d'un petit tube à paroi mince.

4. Procédé suivant la revendication 2, caractérisé en ce qu'on utilise un noyau constitué d'une matière expansée.

5. Procédé suivant la revendication 1, caractérisé en ce qu'on utilise un noyau constitué d'une matière à bas point de fusion, qui est fondu par chauffage subséquent du segment de profilé creux postformé.

6. Procédé suivant la revendication 5, caractérisé en ce qu'on utilise un noyau constitué d'une paraffine dure présentant une température de fusion comprise entre 50 et 130°C.

7. Procédé suivant la revendication 5, caractérisé en ce qu'on utilise un noyau constitué d'une cire à haut point de fusion présentant une température de fusion comprise entre 50 et 200°C.

8. Procédé suivant l'une quelconque des revendications 1 à 7, caractérisé en ce qu'on utilise comme élastomère durcissable un système à réaction à un seul composant ou à plusieurs composants pour compléter le boudin profilé creux à l'aide du moule à injection.

9. Procédé suivant la revendication 8, caractérisé par l'utilisation d'un système à réaction dont la réaction de durcissement est accélérée par une action calorifique.

10. Procédé suivant l'une quelconque des revendications 1 à 5, caractérisé en ce que le chauffage pour la fusion du noyau est réalisé à l'aide du moule à injection chauffé.

11. Procédé suivant l'une quelconque des revendications 1 à 5, caractérisé en ce qu'on procède au chauffage pour la fusion du noyau après le démoulage du boudin profilé postformé.
